# EUROPEAN PATENT SPECIFICATION

(11) **EP 4 521 204 B1**
(45) Date of publication and mention of the grant of the patent: **07.10.2026**
(21) Application number: 23864580.8
(22) Date of filing: 31.08.2023
(51) Int. Cl.: G06F 3/01, G06F 1/3206, G06F 1/16, G06F 1/3215, G06F 1/3231, G06F 1/3234, G06F 3/0488, H04M 1/72454, H04M 1/72463

(54) **DEVICE OPERATION CONTROL METHOD, ELECTRONIC DEVICE, AND STORAGE MEDIUM**
VERFAHREN ZUR STEUERUNG DES BETRIEBS EINER VORRICHTUNG, ELEKTRONISCHE VORRICHTUNG UND SPEICHERMEDIUM
PROCÉDÉ DE COMMANDE DE FONCTIONNEMENT DE DISPOSITIF, DISPOSITIF ÉLECTRONIQUE ET SUPPORT DE STOCKAGE

(30) Priority: 14.09.2022 CN 202211117615
(43) Date of publication of application: 12.03.2025
(73) Proprietor: Huawei Technologies Co., Ltd., Shenzhen, Guangdong 518129 (CN)
(72) Inventor: LI, Xichen, Shenzhen, Guangdong 518129 (CN); HU, Jun, Shenzhen, Guangdong 518129 (CN); GU, Xingquan, Shenzhen, Guangdong 518129 (CN); LUO, Pengtao, Shenzhen, Guangdong 518129 (CN)
(74) Representative: Maiwald GmbH
(86) International application number: PCT/CN2023/116295
(87) International publication number: WO 2024/055848

(56) References cited:
- CN-A- 107 786 743
- CN-A- 108 900 710
- CN-A- 110 730 268
- CN-A- 111 542 802
- CN-A- 112 445 531
- US-A1- 2017 285 868

## Description

### TECHNICAL FIELD

This application relates to the field of terminal device technologies, and in particular, to a device operation control method, an electronic device, and a storage medium.

### BACKGROUND

With rapid development of communication technologies and mobile internet technologies, electronic devices such as smartphones bring great convenience to people's life and work. Smartphones are used as an example. As people use smartphones more frequently, they are gradually accustomed to carrying the smartphones anytime and anywhere. For example, people may carry the smartphones by placing the smartphones in clothes pockets or backpacks.

In a process of carrying a smartphone, if a user walks or runs, or is engaged in another movement, friction is likely to occur between a pocket or a backpack and the smartphone, causing a mistouch on a screen of the smartphone. In this case, the user does not mean to use the smartphone, but the smartphone changes from a screen-off state to a screen-on state due to the mistouch, increasing power consumption of the device.
Document CN 107 786 743 A describes a method and device for preventing accidental touches on terminals.

### SUMMARY

The present invention is defined by the independent claims. The dependent claims define the advantageous embodiments thereof.

This application provides a device operation control method, an electronic device, and a storage medium, to improve a mistouch prevention effect of the electronic device, and reduce power consumption of the electronic device.

According to a first aspect, an embodiment of this application provides a device operation control method, applied to an electronic device. The device operation control method may include: when the electronic device is in a screen-off state, if an optical proximity sensor in the electronic device detects that the electronic device is currently in an uncovered state, and a quantity of times that a touch panel of the electronic device receives a touch event within specified duration reaches a specified quantity of times, obtaining a pose and a motion status of the electronic device; and determining, based on the pose and the motion status of the electronic device, whether to turn on the touch panel of the electronic device. The uncovered state represents that no object exists in a specified range of the electronic device. For example, if the motion status of the electronic device is a non-stationary state, and the pose of the electronic device is a target pose, the electronic device determines not to turn on the touch panel of the electronic device. The target pose means that an included angle between a plane on which the touch panel of the electronic device is located and a straight line perpendicular to a horizontal plane is less than or equal to a specified angle threshold. For example, the specified angle threshold may be 15° or 30°.

According to the device operation control method, when the electronic device is in the screen-off state, if the electronic device is currently in the uncovered state, and the quantity of times that the touch panel of the electronic device receives the touch event within specified duration reaches the specified quantity of times, the pose and the motion status of the electronic device are obtained. It is determined, based on the pose and the motion status of the electronic device, whether to turn on the touch panel of the electronic device. For example, when the pose of the electronic device is the target pose, the included angle between the plane on which the touch panel of the electronic device is located and the straight line perpendicular to the horizontal plane is relatively small, indicating that the electronic device is in a portrait mode or a landscape mode, and the electronic device is likely to be placed in a pocket or a backpack of a user. In addition, the electronic device is in a non-stationary state, indicating that the user is moving. In this case, a received touch operation may be a mistouch caused by friction between the pocket or the backpack and the touch panel of the electronic device, and the electronic device does not turn on the touch panel of the electronic device, thereby avoiding frequent screen turn-on due to mistouches on the touch panel of the electronic device. This improves a mistouch prevention effect of the electronic device, and reduces power consumption of the electronic device.

In a possible implementation, the device operation control method may further include: If the motion status of the electronic device is a stationary state, or the pose of the electronic device is not the target pose, the electronic device determines to turn on the touch panel.

If the electronic device is in the stationary state, or the pose of the electronic device is not the target pose, for example, when the electronic device is placed horizontally on a desktop, an included angle between the plane on which the touch panel of the electronic device is located and the horizontal plane is relatively small, and the included angle between the plane on which the touch panel of the electronic device is located and the straight line perpendicular to the horizontal plane is relatively large. In this case, the electronic device considers that this touch event is initiated by the user who needs to use the electronic device. The electronic device may turn on the touch panel, so that the user can use the electronic device.

In a possible implementation, the device operation control method may further include: if the motion status of the electronic device is a stationary state, stopping obtaining the pose and the motion status of the electronic device.

If the motion status of the electronic device is the stationary state, it indicates that it is almost impossible for the touch panel of the electronic device to be subjected to friction from the pocket or the backpack due to motion. This can basically exclude a possibility of a mistouch on the touch panel of the electronic device. In this case, the electronic device may stop obtaining the pose and the motion status of the electronic device, to avoid generating additional power consumption.

In a possible implementation, the touch event is an event of continuously double-tapping the touch panel of the electronic device when the electronic device is in the screen-off state.

In a possible implementation, if the optical proximity sensor in the electronic device detects that the electronic device is currently in a covered state, the electronic device is controlled to enter a mistouch prevention mode. The covered state represents that an object exists in the specified range of the electronic device. When the optical proximity sensor is in the covered state, the electronic device enters the mistouch prevention mode, and does not respond to the touch operation on the touch panel of the electronic device, so that power consumption of the electronic device can be further reduced.

According to a second aspect, an embodiment of this application provides an electronic device, including a processor, an optical proximity sensor, and a touch panel. The optical proximity sensor is configured to detect whether an object exists in a specified range of the electronic device. The processor is configured to: when the touch panel is in a screen-off state, if the optical proximity sensor detects that the electronic device is currently in an uncovered state, and a quantity of times that the touch panel receives a touch event within specified duration reaches a specified quantity of times, obtain a current pose and a current motion status of the electronic device; and if the motion status of the electronic device is a non-stationary state and the pose of the electronic device is a target pose, determine not to turn on the touch panel. The target pose means that an included angle between a plane on which the electronic device is located and a straight line perpendicular to a horizontal plane is less than or equal to a specified angle threshold.

In a possible implementation, the processor may be further configured to: if the motion status of the electronic device is a stationary state, or the pose of the electronic device is not the target pose, determine to turn on the touch panel.

In a possible implementation, the processor may be further configured to: if the motion status of the electronic device is the stationary state, stop obtaining the pose and the motion status of the electronic device.

In a possible implementation, the touch event is an event of continuously double-tapping the touch panel of the electronic device when the electronic device is in the screen-off state.

According to a third aspect, an embodiment of this application provides an electronic device, including a module configured to perform any method provided in the first aspect.

According to a fourth aspect, an embodiment of this application provides a computer-readable storage medium. The computer-readable storage medium stores computer-executable instructions. The computer-executable instructions are used to enable a computer to perform the method provided in any possible design of the first aspect.

According to a fifth aspect, an embodiment of this application provides a computer program product, including computer-executable instructions. The computer-executable instructions are used to enable a computer to perform the method provided in any possible design of the first aspect.

For technical effects that can be achieved in any one of the second aspect to the fifth aspect, refer to the descriptions of beneficial effects in the first aspect. Details are not described herein.

### BRIEF DESCRIPTION OF DRAWINGS

FIG. 1 is a diagram of a hardware architecture of an electronic device according to an embodiment of this application;
FIG. 2 is a diagram of a software architecture of an electronic device according to an embodiment of this application;
FIG. 3 is a diagram of a possible desktop style of an electronic device according to an embodiment of this application;
FIG. 4 is a diagram of a possible setting interface style of an electronic device according to an embodiment of this application;
FIG. 5 is a diagram of another possible setting interface style of an electronic device according to an embodiment of this application;
FIG. 6 is a diagram of an electronic device placed in a clothes pocket according to an embodiment of this application;
FIG. 7 is a diagram of an electronic device placed in a portrait mode according to an embodiment of this application;
FIG. 8 is a diagram of another electronic device placed in a clothes pocket according to an embodiment of this application;
FIG. 9 is a diagram of an electronic device placed in a landscape mode according to an embodiment of this application;
FIG. 10 is a flowchart of a device operation control method according to an embodiment of this application; and
FIG. 11 is a block diagram of a structure of an electronic device according to an embodiment of this application.

### DESCRIPTION OF EMBODIMENTS

To make the objectives, technical solutions, and advantages of embodiments of this application clearer, the following describes embodiments of this application in detail with reference to the accompanying drawings. Terms used in implementations of this application are merely used to explain specific embodiments of this application, but are not intended to limit this application.

Before specific solutions provided in embodiments of this application are described, some terms in this application are explained and described, to facilitate understanding by a person skilled in the art, but not to limit the terms in this application.
(1) An optical proximity sensor is a sensor in an electronic device, and may be integrated into a sensor module of the electronic device, or may be disposed separately. The optical proximity sensor is configured to detect whether an object exists in a specified range near the electronic device. For example, the optical proximity sensor may include, for example, a light-emitting diode and an optical detector. The optical proximity sensor emits infrared light by using the light-emitting diode, and detects infrared reflected light from a nearby object by using the optical detector. When sufficient reflected light is detected, it indicates that the optical proximity sensor is currently in a covered state, and it may be determined that the object exists in the specified range near the electronic device. When insufficient reflected light is detected, it indicates that the optical proximity sensor is currently in an uncovered state, and it may be determined that no object exists in the specified range near the electronic device.
(2) A mistouch prevention mode is an operating mode of the electronic device, and is used to prevent the electronic device from responding to a misoperation on a touch panel. When the optical proximity sensor detects that the optical proximity sensor is currently in the covered state, the electronic device enables the mistouch prevention mode. When the electronic device is in the mistouch prevention mode, the electronic device does not respond to any touch operation on the touch panel, to avoid a misoperation of a user and save energy of the electronic device. When the optical proximity sensor detects that the electronic device is currently in the uncovered state, the electronic device disables the mistouch prevention mode. For example, when the electronic device is in specific space in which there is no obstruction in an ambient environment, the optical proximity sensor is currently in the uncovered state.
(3) A screen-off state means that a display of the electronic device is off, and no information is displayed. When the electronic device is in the screen-off state, the user may turn on the screen of the electronic device by touching the touch panel of the electronic device, pressing a mechanical button of the electronic device, pressing a power button on a side of the electronic device, or the like.

In embodiments of this application, "a plurality of" means two or more. In view of this, "a plurality of" may also be understood as "at least two" in embodiments of this application. "At least one" may be understood as one or more, for example, one, two, or more. For example, "include at least one" means "include one, two, or more", and there is no limitation on which is included. For example, "include at least one of A, B, and C" may mean "include A, B, or C", "include A and B, A and C, or B and C", or "include A, B, and C". The term "and/or" describes an association relationship for describing associated objects and represents that three relationships may exist. For example, A and/or B may represent the following three cases: Only A exists, both A and B exist, and only B exists. In addition, unless otherwise specified, a character "/" generally represents an "or" relationship between the associated objects.

Unless otherwise specified, ordinal numbers such as "first" and "second" in embodiments of this application are for distinguishing between a plurality of objects, but are not intended to limit an order, a time sequence, priorities, or importance of the plurality of objects.

Currently, when an electronic device is placed in a clothes pocket or a net bag that is on one side of a backpack of a user, when a material of the clothes pocket is relatively thin or transparent, or due to a feature like a hollow-out structure of the net bag, an optical proximity sensor detects that the electronic device is in an uncovered state. Therefore, the electronic device does not enter a mistouch prevention mode. In this case, if the user walks or runs, or is engaged in another movement, friction is likely to occur between the pocket or the backpack and the electronic device, causing a mistouch on the touch panel of the electronic device. The electronic device changes from a screen-off state to a screen-on state, increasing power consumption of the electronic device.

Based on this, an embodiment of this application provides a device operation control method. When an optical proximity sensor in an electronic device detects that the electronic device is currently in an uncovered state, a processor may count a quantity of times that a touch panel of the electronic device receives a touch event. If the quantity of times that the touch event is received within specified duration reaches a specified quantity of times, for example, a relatively large quantity of consecutive touch events are received within a relatively short time, a current pose and a current motion status of the electronic device are obtained. Then, it is determined, based on the pose and the motion status of the electronic device, whether to perform a screen turn-on operation. For example, when it is determined that the electronic device is currently almost in a portrait mode and is in a motion or moving process, it may be determined that the electronic device may be currently in a transparent or light-transmitting clothes bag or in a net bag of a backpack of a user. In this case, the processor may control the touch panel of the electronic device to retain a screen-off state, thereby avoiding frequent screen turn-on due to mistouches on the touch panel of the electronic device. This improves a mistouch prevention effect of the electronic device, and reduces power consumption of the electronic device.

For example, if the motion status of the electronic device is a non-stationary state, it indicates that the user is carrying the electronic device in motion. If the pose of the electronic device is a target pose, to be specific, an included angle between a plane on which the touch panel of the electronic device is located and a straight line perpendicular to a horizontal plane is less than or equal to a specified angle threshold, which is equivalent to a state in which the electronic device is perpendicular to the ground. This indicates that the electronic device is placed in the transparent or light-transmitting clothes bag or the net bag of the backpack of the user. Frequent touch events received by the electronic device may be caused by friction between the pocket or the net bag of the backpack and a screen of the electronic device. Therefore, the screen turn-on operation may not be performed, and the screen-off state is retained, to avoid an additional increase in power consumption of the electronic device caused by frequent screen turn-on.

The device operation control method provided in embodiments of this application may be applied to the electronic device provided with the touch panel. The electronic device may be a device that provides the user with video shooting and/or data connectivity, a handheld device with a wireless connection function, or another processing device connected to a wireless modem, for example, a mobile phone (or referred to as a "cellular" phone) or a smartphone, and may be a portable, pocket-sized, handheld, or wearable device (such as a smartwatch), a tablet computer, a personal computer (Personal Computer, PC), a PDA (Personal Digital Assistant, personal digital assistant), an in-vehicle computer, an uncrewed aerial vehicle, an aerial photography device, a computer, or the like. A type of the electronic device is not limited herein in this application, and any electronic device provided with a touch panel is applicable to the solutions in embodiments of this application.

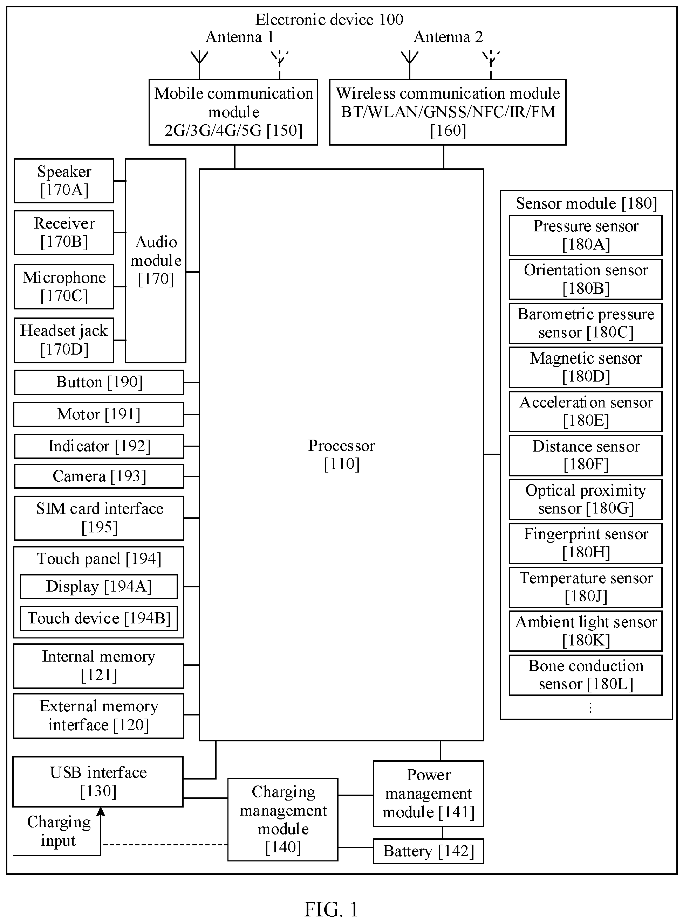

The following first describes a diagram of a structure of an electronic device as an example. FIG. 1 is a diagram of an optional hardware structure of an electronic device 100 to which an embodiment of this application is applicable.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a touch panel (touch panel, TP) 194, a display 194A, a touch device 194B, a subscriber identity module (subscriber identity module, SIM) card interface 195, and the like. The sensor module 180 may include a pressure sensor 180A, an orientation sensor (orientation sensor) 180B, a barometric pressure sensor 180C, a magnetic sensor 180D, an acceleration sensor 180E, a distance sensor 180F, an optical proximity sensor 180G, a fingerprint sensor 180H, a temperature sensor 180J, an ambient light sensor 180K, a bone conduction sensor 180L, and the like.

It may be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware. The following describes functions of only some related components used in the solutions of this application in detail. For functions of other components, refer to functions in the prior art or briefly describe the functions herein.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on instruction operation code and a time sequence signal, to complete control of instruction fetch and instruction execution.

A memory may be further disposed in the processor 110, and is configured to store instructions and data. In some embodiments, the memory in the processor 110 is a cache memory. The memory may store instructions or data that has been recently used or cyclically used by the processor 110. If the processor 110 needs to use the instructions or the data again, the processor may directly invoke the instructions or the data from the memory. This avoids repeated access, reduces waiting time of the processor 110, and improves system efficiency. In this embodiment of this application, when the display 194A is in a screen-off state, the processor 110 may control the optical proximity sensor 180G to detect a covering status of an object around the electronic device, determine whether the electronic device is currently in a covered state or an uncovered state, detect a quantity of times that the touch panel 194 of the electronic device receives a touch event within specified duration when the electronic device is in the uncovered state, determine a current motion status and a current pose of the electronic device based on the quantity of times and the detection of the sensor module 180, and determine, based on the current motion status and the pose of the electronic device, whether to turn on the display 194A in the touch panel 194, or retain the screen-off state of the display 194A, to reduce power consumption of the electronic device.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (serial clock line, SCL). In some embodiments, the processor 110 may include a plurality of groups of I2C buses. The processor 110 may be separately coupled to the touch panel 194, a charger, a flash, the camera 193, and the like through different I2C bus interfaces. For example, the processor 110 may be coupled to the touch panel 194 through the I2C interface, so that the processor 110 communicates with the touch panel 194 through the I2C bus interface, to implement a touch function of the electronic device 100.

The I2S interface may be configured to perform audio communication. In some embodiments, the processor 110 may include a plurality of groups of 12S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be used to perform audio communication, and sample, quantize, and code an analog signal. In some embodiments, the audio module 170 may be coupled to the wireless communication module 160 through a PCM bus interface. In some embodiments, the audio module 170 may alternatively transmit an audio signal to the wireless communication module 160 through the PCM interface, to implement a function of answering a call through a Bluetooth headset. Both the I2S interface and the PCM interface may be configured to perform audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 and a peripheral component like the camera 193. The MIPI interface includes a camera serial interface (camera serial interface, CSI), a display serial interface (display serial interface, DSI), and the like. In some embodiments, the processor 110 communicates with the camera 193 through the CSI, to implement a photographing function of the electronic device 100.

The GPIO interface may be configured by software. The GPIO interface may be configured as a control signal or a data signal. In some embodiments, the GPIO interface may be configured to connect the processor 110 and the camera 193, the wireless communication module 160, the audio module 170, the sensor module 180, or the like. The GPIO interface may alternatively be configured as an I2C interface, an I2S interface, a UART interface, an MIPI interface, or the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N3 SIM card interfaces, where N3 is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 may be compatible with different types of SIM cards. The SIM card interface 195 may be also compatible with an external memory card. The electronic device 100 interacts with a network by using the SIM card, to implement functions such as conversation and data communication. In some embodiments, the electronic device 100 uses an eSIM, namely, an embedded SIM card. The eSIM card may be embedded into the electronic device 100, and cannot be separated from the electronic device 100.

The USB interface 130 is an interface that conforms to a USB standard specification, and may be specifically a mini USB interface, a micro USB interface, a USB type-C interface, or the like. The USB interface may be configured to connect to a charger to charge the electronic device 100, or may be configured to transmit data between the electronic device 100 and a peripheral device, or may be configured to connect to a headset for playing audio by using the headset. The interface may be further configured to connect to another electronic device, for example, an AR device.

It may be understood that an interface connection relationship between the modules illustrated in this embodiment of this application is merely an example for description, and does not constitute a limitation on a structure of the electronic device 100. In some other embodiments of this application, the electronic device 100 may alternatively use an interface connection manner different from that in the foregoing embodiments, or use a combination of a plurality of interface connection manners.

The charging management module 140 is configured to receive a charging input from the charger. The charger may be a wireless charger or a wired charger. In some embodiments of wired charging, the charging management module 140 may receive a charging input from the wired charger through the USB interface 130. The charging management module 140 supplies power to the electronic device by using the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, the camera 193, the wireless communication module 160, and the like. A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. The mobile communication module 150 may provide a wireless communication solution that is applied to the electronic device 100 and that includes 2G, 3G, 4G, 5G, and the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing like filtering or amplification on the received electromagnetic wave, and transmit a processed electromagnetic wave to the modem processor for demodulation. The mobile communication module 150 may further amplify a signal modulated by the modem processor, and convert an amplified signal into an electromagnetic wave for radiation through the antenna 1. The wireless communication module 160 may provide a wireless communication solution applied to the electronic device 100. The wireless communication module 160 receives an electromagnetic wave through the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the electronic device 100, the antenna 1 and the mobile communication module 150 are coupled, and the antenna 2 and the wireless communication module 160 are coupled, so that the electronic device 100 can communicate with a network and another device by using a wireless communication technology. The electronic device 100 may implement an audio function, for example, music playing or recording, by using the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to encode and decode an audio signal. In some embodiments, the audio module 170 may be disposed in the processor 110, or some functional modules of the audio module 170 are disposed in the processor 110.

The speaker 170A, also referred to as a "loudspeaker", is configured to convert an audio electrical signal into a sound signal. The electronic device 100 may be used to listen to music or answer a call in a hands-free mode over the speaker 170A.

The receiver 170B, also referred to as an "earpiece", is configured to convert an audio electrical signal into a sound signal. When a call is answered or a voice message is received by using the electronic device 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, and input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and identify a sound source, so as to implement a directional recording function and the like.

The headset jack 170D is configured to connect to a wired headset. The headset jack 170D may be the USB interface 130, or may be a 3.5 mm open mobile terminal platform (open mobile terminal platform, OMTP) standard interface, or a cellular telecommunications industry association of the USA (cellular telecommunications industry association of the USA, CTIA) standard interface.

The sensor module 180 may include the pressure sensor 180A, the orientation sensor 180B, the barometric pressure sensor 180C, the magnetic sensor 180D, the acceleration sensor 180E, the distance sensor 180F, the optical proximity sensor 180G, the fingerprint sensor 180H, the temperature sensor 180J, the ambient light sensor 180K, the bone conduction sensor 180L, and the like.

The pressure sensor 180A is configured to sense a pressure signal, and can convert the pressure signal into an electrical signal. In some embodiments, the pressure sensor 180A may be disposed on the display 194A. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change of the capacitance. When a touch operation is performed on the display 194A, the electronic device 100 detects intensity of the touch operation by using the pressure sensor 180A. The electronic device 100 may also calculate a touch location based on a detection signal of the pressure sensor 180A. In some embodiments, touch operations that are performed in a same touch position but have different touch operation intensity may correspond to different operation instructions. For example, when a touch operation whose touch operation intensity is less than a first pressure threshold is performed on an SMS message application icon, an instruction for viewing an SMS message is performed. When a touch operation whose touch operation intensity is greater than or equal to the first pressure threshold is performed on the SMS message application icon, an instruction for creating a new SMS message is performed. In this embodiment of this application, the pressure sensor 180A is used to detect whether the touch panel 194 receives a specified quantity of touch events within specified duration.

The orientation sensor 180B may be configured to determine the pose of the electronic device 100. In some embodiments, angular positions of the electronic device 100 around three axes (namely, axes x, y, and z) may be determined by using the orientation sensor 180B. In this embodiment of this application, the orientation sensor 180B is used to detect pose data of the electronic device.

In some embodiments, the sensor module may further include a gyroscope sensor. The gyroscope sensor may be configured to implement image stabilization during photographing.

The barometric pressure sensor 180C is configured to measure barometric pressure. In some embodiments, the electronic device 100 calculates an altitude based on a value of the barometric pressure measured by the barometric pressure sensor 180C, to assist in positioning and navigation.

The magnetic sensor 180D includes a Hall sensor. The electronic device 100 may detect opening and closing of a flip leather case by using the magnetic sensor 180D. In some embodiments, when the electronic device 100 is a flip phone, the electronic device 100 may detect opening and closing of a flip cover by using the magnetic sensor 180D. Further, a feature like automatic unlocking of the flip cover is set based on a detected opening or closing state of the leather case or a detected opening or closing state of the flip cover.

The acceleration sensor 180E may detect accelerations of the electronic device 100 in various directions (usually on three axes). When the electronic device 100 is still, a magnitude and a direction of gravity may be detected. The acceleration sensor 180E may be further configured to recognize a posture of the electronic device, and is used in an application like switching between a landscape mode and a portrait mode or a pedometer. In this embodiment of this application, the acceleration sensor 180E is used to detect that the electronic device is in a stationary state, a moving state, or the like.

The distance sensor 180F is configured to measure a distance. The electronic device 100 may measure the distance in an infrared manner or a laser manner. In some embodiments, in a photographing scenario, the electronic device 100 may measure a distance by using the distance sensor 180F to implement quick focusing.

The optical proximity sensor 180G may include, for example, a light-emitting diode (LED) and an optical detector, for example, a photodiode. The light-emitting diode may be an infrared light-emitting diode. The electronic device 100 emits infrared light by using the light-emitting diode. The electronic device 100 detects infrared reflected light from a nearby object by using the photodiode. When sufficient reflected light is detected, it may be determined that an object exists in a specified range near the electronic device 100. When insufficient reflected light is detected, the electronic device 100 may determine that there is no object in the specified range near the electronic device 100. The electronic device 100 may detect, by using the optical proximity sensor 180G, that the user holds the electronic device 100 close to an ear for a call, to automatically turn off a screen for power saving. In some embodiments, the optical proximity sensor 180G may be configured to determine whether to enable a mistouch prevention mode. For example, when the optical proximity sensor 180G detects that there is an object in the specified range near the electronic device 100, it indicates that the optical proximity sensor 180G is currently in the covered state, and the electronic device 100 may enable the mistouch prevention mode.

The ambient light sensor 180K is configured to sense ambient light brightness. In some embodiments, the electronic device 100 may determine exposure time of an image based on the ambient light brightness sensed by the ambient light sensor 180K. In some embodiments, the electronic device 100 may adaptively adjust brightness of the display 194A based on the sensed ambient light brightness. The ambient light sensor 180K may also be configured to automatically adjust white balance during photographing.

The fingerprint sensor 180H is configured to collect a fingerprint. The electronic device 100 may implement fingerprint-based unlocking, application lock access, fingerprint-based photographing, fingerprint-based call answering, and the like by using a feature of the collected fingerprint.

The temperature sensor 180J is configured to detect a temperature. In some embodiments, the electronic device 100 executes a temperature processing policy based on the temperature detected by the temperature sensor 180J. For example, when the temperature reported by the temperature sensor 180J exceeds a threshold, the electronic device 100 lowers performance of a processor nearby the temperature sensor 180J, to reduce power consumption for thermal protection. In some other embodiments, when the temperature is lower than another threshold, the electronic device 100 heats up the battery 142 to avoid abnormal shutdown of the electronic device 100 caused by the low temperature. In some other embodiments, when the temperature is lower than still another threshold, the electronic device 100 boosts an output voltage of the battery 142 to avoid abnormal shutdown caused by the low temperature.

The bone conduction sensor 180L may obtain a vibration signal. In some embodiments, the bone conduction sensor 180L may obtain a vibration signal of a bone vibrated by a human vocal-cord part. The bone conduction sensor 180L may also be in contact with a human pulse, to receive a blood pressure beating signal. In some embodiments, the bone conduction sensor 180L may alternatively be disposed in the headset, to be combined into a bone conduction headset. The audio module 170 may obtain a voice signal through parsing based on the vibration signal that is of the bone vibrated by the vocal-cord part and that is obtained by the bone conduction sensor 180L, to implement a voice function. The application processor may parse heart rate information based on the blood pressure beating signal obtained by the bone conduction sensor 180L, to implement a heart rate detection function.

The electronic device 100 implements a display function by using the graphics processing unit (Graphics Processing Unit, GPU), the display 194A, the application processor, and the like. The GPU is a microprocessor for image processing, and is connected to the display 194A and the application processor. The GPU is configured to: perform mathematical and geometric computation, and render an image. The processor 110 may include one or more GPUs that execute program instructions to generate or change display information.

The electronic device 100 may implement a photographing function by using the image signal processor (Image Signal Processor, ISP), the camera 193, the video codec, the GPU, the display 194A, the application processor, and the like.

The ISP is configured to process data fed back by the camera 193. For example, during photographing, a shutter is pressed, and light is transmitted to a photosensitive element of the camera via a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scene. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV. In some embodiments, the processor 110 may trigger starting of the camera 193 based on a program or instructions in the internal memory 121. In this case, the camera 193 captures at least one image and performs corresponding processing on the at least one image based on the program or instructions, for example, rotational image deblurring, translational image deblurring, demosaicing, denoising or enhancement processing, and image post-processing. After processing, the display 194A may display a processed image. In some embodiments, the electronic device 100 may include one or N2 cameras 193, where N2 is a positive integer greater than 1. For example, the electronic device 100 may include at least one front-facing camera and at least one rear-facing camera. For example, the electronic device 100 may further include a side camera. In a possible implementation, the electronic device may include two rear-facing cameras, for example, a primary camera and a long-focus camera. Alternatively, the electronic device may include three rear-facing cameras, for example, a primary camera, a wide-angle camera, and a long-focus camera. Alternatively, the electronic device may include four rear-facing cameras, for example, a primary camera, a wide-angle camera, a long-focus camera, and a medium-focus camera.

The digital signal processor is configured to process a digital signal, and may process another digital signal in addition to the digital image signal. For example, when the electronic device 100 selects a frequency, the digital signal processor is configured to perform Fourier transformation on frequency energy.

The video codec is configured to compress or decompress a digital video. The electronic device 100 may support one or more video codecs. Therefore, the electronic device 100 may play or record videos in a plurality of coding formats, for example, moving picture experts group (moving picture experts group, MPEG)-1, MPEG-2, MPEG-3, and MPEG-4.

The touch panel 194 may also be referred to as a touchpanel. The touch panel 194 may include the display 194A and the touch device 194B, and the touch device 194B may also be referred to as a touch sensor. The touch device 194B and the display 194A may be disposed on a surface of the electronic device 100, and the touch device 194B may be disposed on the display 194A. The touch device 194B may be configured to: detect a touch operation performed on or near the touch device 194B, and transfer the detected touch operation to the processor 110, so that the processor 110 determines a type of a touch event, and performs a corresponding operation. For example, when the display 194A of the electronic device 100 is in the screen-off state, if the touch event for the touch panel 194 is received by using the touch device 194B, a screen turn-on operation may be performed. In this embodiment of this application, the touch device 194B detects whether a specified quantity of touch events occur within specified duration, and sends a detection result to the processor 110, so that the processor 110 determines whether to turn on the screen or continue to retain the screen-off state.

The external memory interface 120 may be configured to connect to the external memory card, for example, a micro SD card, to increase a storage capability of the electronic device 100. The external memory card communicates with the processor 110 through the external memory interface 120, to implement a data storage function. For example, files such as music and a video are stored in the external memory card.

The internal memory 121 may be configured to store computer-executable program code. The executable program code includes instructions. The internal memory 121 may include a program storage area and a data storage area. The program storage area may store an operating system, an application (for example, a camera application) required by at least one function, and the like. The data storage area may store data (such as an image captured by a camera) and the like created in a process of using the electronic device 100. In addition, the internal memory 121 may include a high-speed random access memory, and may further include a non-volatile memory, for example, at least one magnetic disk storage device, a flash memory, or a universal flash storage (universal flash storage, UFS). The processor 110 runs the instructions stored in the internal memory 121 and/or the instructions stored in the memory disposed in the processor, to perform various function applications and data processing of the electronic device 100. The internal memory 121 may further store code for controlling operation of the electronic device. When the code that is stored in the internal memory 121 and that is for controlling operation of the electronic device is run by the processor 110, the device operation control method provided in this embodiment of this application may be implemented. Certainly, the code for controlling operation of the electronic device provided in this embodiment of this application may alternatively be stored in an external memory. In this case, the processor 110 may run, by using the external memory interface 120, the code for controlling operation of the electronic device, to implement the device operation control method provided in this embodiment of this application.

The button 190 includes a power button, a volume button, and the like. The button 190 may be a mechanical button or a touch button. The electronic device 100 may receive a key input, and generate a key signal input related to a user setting and function control of the electronic device 100.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effects. The motor 191 may also correspond to different vibration feedback effects for touch operations performed on different areas of the touch panel 194. Different application scenarios (for example, a time reminder, information receiving, an alarm clock, and a game) may also correspond to different vibration feedback effects. Touch vibration feedback effects may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N3 SIM card interfaces, where N3 is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 may be compatible with different types of SIM cards. The SIM card interface 195 may be also compatible with the external memory card. The electronic device 100 interacts with a network by using the SIM card, to implement functions such as conversation and data communication. In some embodiments, the electronic device 100 uses an eSIM, namely, an embedded SIM card. The eSIM card may be embedded into the electronic device 100, and cannot be separated from the electronic device 100.

The following describes an architecture of a software system of an electronic device 100. The software system of the electronic device 100 may use a layered architecture, an event-driven architecture, a microkernel architecture, a microservice architecture, or a cloud architecture. In embodiments of this application, an Android system with the layered architecture is used as an example to describe a software structure of the electronic device 100.

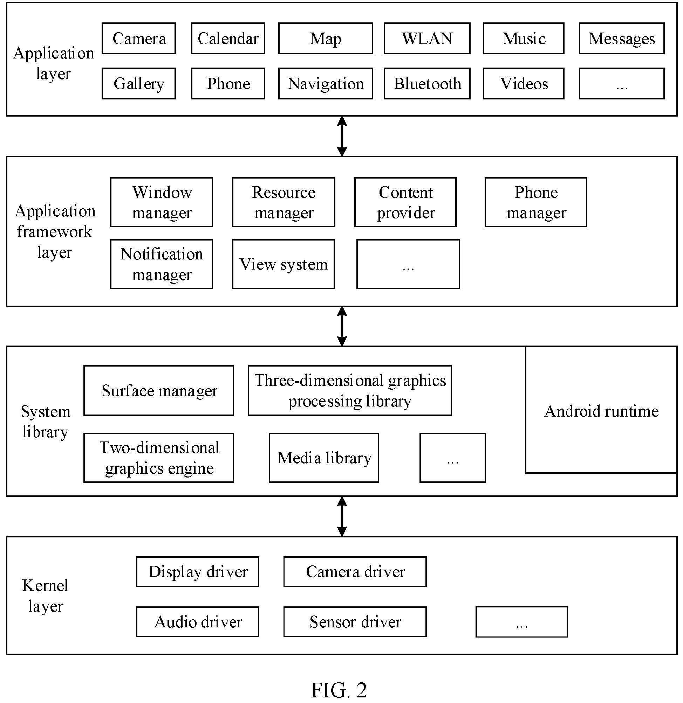

FIG. 2 is a block diagram of a software structure of an electronic device 100 according to an embodiment of this application. In a layered architecture, software is divided into several layers, and each layer has a clear role and task. The layers communicate with each other through a software interface. In some embodiments, the Android system is divided into four layers: an application layer, an application framework (framework, FWK) layer, an Android runtime (Android runtime) and system library, and a kernel layer from top to bottom. The application layer may include a series of application packages.

As shown in FIG. 2, the application packages may include applications such as Camera, Gallery, Calendar, Phone, Map, Navigation, WLAN, Bluetooth, Music, Videos, and Messages.

The application framework layer provides an application programming interface (application programming interface, API) and a programming framework for an application in the application layer. The application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, and the like.

The content provider is configured to: store and obtain data, and enable the data to be accessed by an application. The data may include a video, an image, audio, calls that are made and answered, a browsing history and bookmarks, an address book, and the like.

The view system includes visual controls such as a control for displaying a text and a control for displaying an image. The view system may be used to construct an application. A display interface may include one or more views. For example, a display interface including an SMS notification icon may include a text display view and an image display view.

The phone manager is configured to provide a communication function for the electronic device 100, for example, management of a call status (including answering, declining, or the like).

The resource manager provides various resources such as a localized character string, an icon, an image, a layout file, and a video file for an application.

The notification manager enables an application to display notification information in a status bar, and may be configured to convey a notification message. The notification manager may automatically disappear after a short pause without requiring a user interaction. For example, the notification manager is configured to notify download completion, provide a message notification, and the like. The notification manager may alternatively be a notification that appears in a top status bar of the system in a form of a graph or a scroll bar text, for example, a notification of an application that is run on a background, or may be a notification that appears on a screen in a form of a dialog window. For example, text information is displayed in the status bar, a prompt tone is made, the electronic device vibrates, or the indicator light blinks.

The Android runtime includes a kernel library and a virtual machine. The Android runtime is responsible for scheduling and management of the Android system.

The kernel library includes two parts: a function that needs to be called in Java language and a kernel library of Android.

The application layer and the application framework layer run on the virtual machine. The virtual machine executes Java files of the application layer and the application framework layer as binary files. The virtual machine is configured to implement functions such as object lifecycle management, stack management, thread management, security and exception management, and garbage collection.

The system library may include a plurality of functional modules such as a surface manager (surface manager), a media library (Media Library), a three-dimensional graphics processing library (for example, OpenGL ES), a 2D graphics engine (for example, SGL).

The surface manager is configured to manage a display subsystem and provide fusion of 2D and 3D layers for a plurality of applications.

The media library supports playback and recording in a plurality of commonly used audio and video formats, static image files, and the like. The media library may support a plurality of audio and video encoding formats such as MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

In some embodiments of this application, when a touch device in the electronic device receives the touch operation, a notification message of a corresponding hardware interruption is sent to the kernel layer. The kernel layer processes a notification message of the touch operation into an original input event (including information such as touch coordinates and a timestamp of the touch operation). The original input event is stored at the kernel layer. The application framework layer obtains the original input event from the kernel layer. For example, the touch operation is a double-tap touch operation. If the electronic device is currently in a screen-off state, and an optical proximity sensor detects that the electronic device is currently in an uncovered state, the display driver may be started by using the kernel layer, to display an unlocking interface or a desktop interface of the electronic device. If the optical proximity sensor detects that the electronic device is currently in the uncovered state, and a quantity of times that the touch device of the electronic device receives a touch event within specified duration reaches a specified quantity of times, the application framework layer may obtain a pose and a motion status of the electronic device, and determine, based on the pose and the motion status of the electronic device, whether to start the display driver by using the kernel layer, to display the unlocking interface or the desktop interface of the electronic device.

It should be understood that the foregoing function service is merely an example. During actual application, the electronic device may be divided into more or fewer function services based on another factor, or may be divided into functions of services in another manner, or may operate as a whole without dividing the function services.

With reference to the hardware architecture of the electronic device shown in FIG. 1 and the software architecture shown in FIG. 2, the following uses specific embodiments to describe the device operation control method provided in this application in detail.

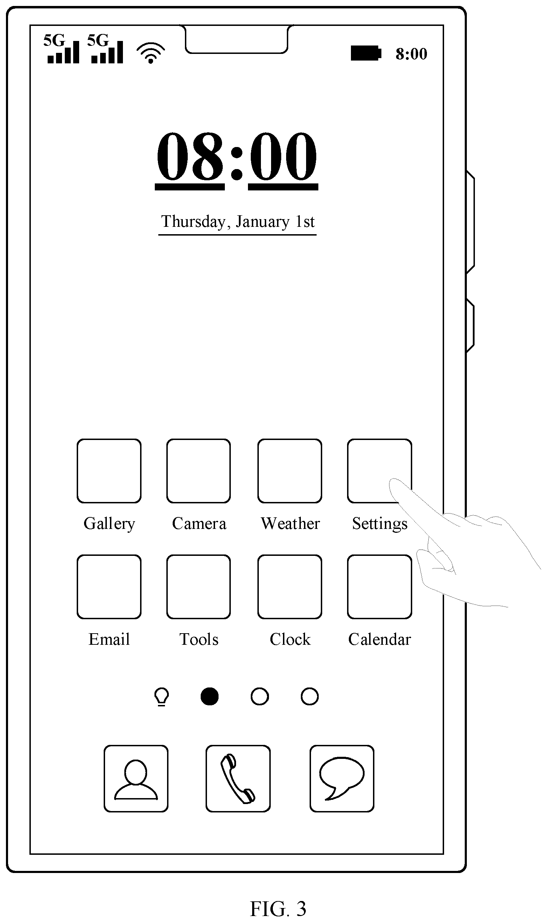

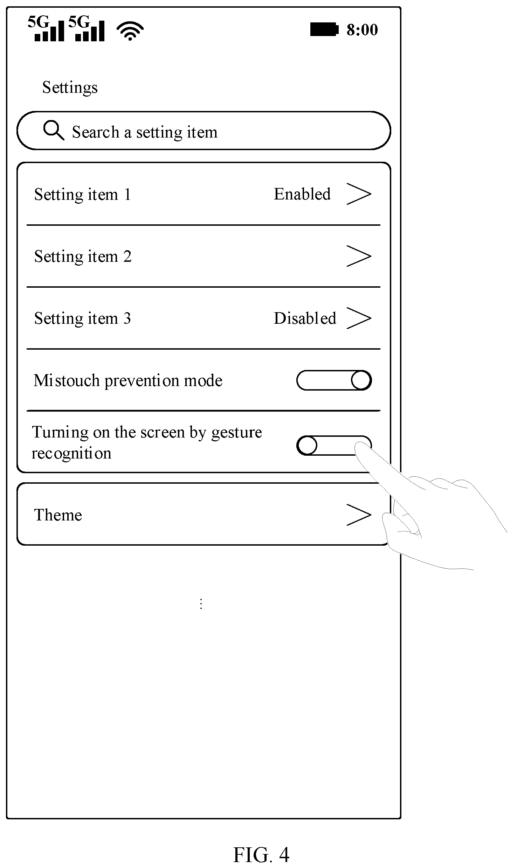

The solutions provided in embodiments of this application may be applied to a portable electronic device like a smartphone provided with a touch panel. The following uses the smartphone as an example for description. FIG. 3 is a diagram of an example of a desktop of a smartphone. An application (application, APP) installed in the smartphone and an icon of a functional module carried in an operating system of the smartphone may be displayed on the desktop of the smartphone. When a user taps an icon of a "Settings" functional module on the desktop, the smartphone may enter the "Settings" functional module in response to an operation in which the user taps the icon of the "Settings" functional module, and display a setting interface shown in FIG. 4.

A plurality of setting items that can be operated by the user are displayed in the setting interface shown in FIG. 4, including a setting item of "Turning on the screen by gesture recognition". A switch control is correspondingly arranged on a right side of the setting item of "Turning on the screen by gesture recognition". The smartphone may receive an operation of the user by using the switch control, to enable or disable a function of turning on a screen by gesture recognition. The function of turning on the screen by gesture recognition means that when the smartphone is in a screen-off state, the smartphone may turn on the screen by recognizing and responding to a touch operation of the user that corresponds to a gesture on the touch panel. When the user slides the switch control to toggle the switch control to an "on" state, the smartphone may enable, in response to the operation of the user of enabling the function of turning on the screen based on a corresponding gesture recognition, the function of turning on the screen by gesture recognition. To make use of the smartphone more convenient, some users may choose to enable the function of the smartphone to turn on the screen by gesture recognition. After the function of turning on the screen by gesture recognition is enabled, in a screen-off state, the smartphone may recognize a touch of a corresponding gesture performed by the user on the touch panel of the smartphone, and perform a screen turn-on operation in response to a received touch event corresponding to the gesture on the touch panel. For example, in the screen-off state, if the smartphone receives an operation of double-tapping the touch panel by the user, the smartphone may perform the screen turn-on operation, and display an operating interface or an unlocking interface of the smartphone through a display. If the smartphone displays a lock screen interface, the user may unlock the screen by entering a password of the mobile phone, through facial recognition, or the like.

In the foregoing application scenarios, to reduce frequent screen turn-on of the touch panel of the smartphone due to received mistouch operations, which increases misoperations of the user and power consumption of the device, this embodiment of this application provides a device operation control method.

As described above, an optical proximity sensor may emit infrared light by using a light-emitting diode, and detect intensity of reflected light from a nearby object by using a photodiode. The electronic device may obtain, in real time, light intensity data of the reflected light that is detected by the optical proximity sensor, and determine, based on the received light intensity data, whether the electronic device in which the optical proximity sensor is located is currently in a covered state. For example, if the received light intensity data is greater than a specified light intensity threshold, it indicates that the optical proximity sensor detects sufficient reflected light, and an object exists in a specified range near the electronic device. In this case, it may be determined that the electronic device is currently in the covered state. If the received light intensity data is less than or equal to the specified light intensity threshold, it indicates that the optical proximity sensor detects insufficient reflected light, and it may be determined that no object exists in the specified range near the electronic device. In this case, it may be determined that the electronic device is currently in an uncovered state.

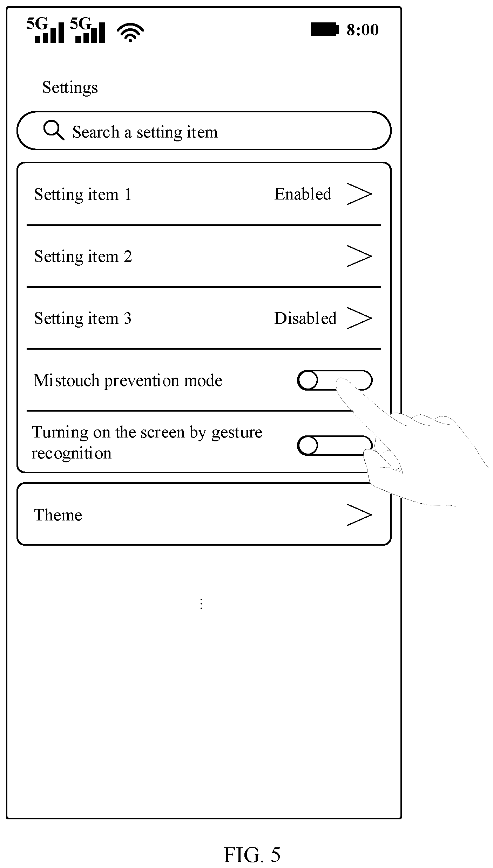

If the electronic device is currently in the covered state, the electronic device automatically enters a mistouch prevention mode based on a function of the current electronic device. For example, as shown in FIG. 5, in some embodiments, the setting interface of the electronic device may include a setting item of "Mistouch prevention mode". A switch control is correspondingly arranged on a right side of the setting item of "Mistouch prevention mode". The electronic device may receive the operation of the user by using the switch control, to enable or disable the mistouch prevention mode. When the user slides the switch control to toggle the switch control to the "on" state, the electronic device may enable the mistouch prevention mode in response to the operation of enabling the mistouch prevention mode by the user.

If the electronic device is currently in the covered state, it indicates that the object, an obstruction, or the like exists around the electronic device. For example, the electronic device may be currently placed in a pocket or a backpack of the user, or the user is making or answering a call by using the electronic device. In this case, if the mistouch prevention mode is in the "on" state, the electronic device may enter the mistouch prevention mode.

In some other embodiments, the electronic device may set the mistouch prevention mode to the "on" state by default. In this case, if the optical proximity sensor in the electronic device detects that the electronic device is currently in the covered state, the electronic device automatically enters the mistouch prevention mode.

In the mistouch prevention mode, the electronic device does not respond to any touch operation on the touch panel, to prevent the electronic device from turning on the screen due to friction between the pocket or the backpack and the screen of the electronic device, and avoid an additional increase in power consumption of the electronic device due to a mistouch.

If the optical proximity sensor in the electronic device detects that the electronic device is currently in the uncovered state, the electronic device does not enter the mistouch prevention mode. In this case, the electronic device may receive and respond to the touch event of the user on the touch panel. For example, the touch event may be an event of continuously double-tapping the touch panel of the electronic device when the electronic device is in the screen-off state. Alternatively, the touch event may be a sliding event for the touch panel of the electronic device when the electronic device is in the screen-off state. For example, when the user double-taps the touch panel of the electronic device, a touch panel driver (TP driver) generates the touch event, and reports the touch event to an application framework layer of the electronic device. In this way, a processor of the electronic device may receive the touch event for the touch panel.

The processor of the electronic device may count a quantity of times that the touch panel of the electronic device receives the touch event within specified duration. The specified duration may be 5 seconds, and the electronic device may record the received touch event. For example, when the electronic device is in the screen-off state, each time the touch event for the touch panel is received, the electronic device records the touch event and a time corresponding to the touch event, and deletes a related record of the touch event 5 seconds later.

The processor of the electronic device determines whether the quantity of times that the touch event is received within specified duration reaches a specified quantity of times. The specified quantity of times may be 3. If the quantity of times that the touch panel of the electronic device receives the touch event within 5 seconds does not reach 3, the electronic device considers that the touch event is initiated by the user who needs to use the electronic device. The electronic device may perform the screen turn-on operation to turn on the touch panel of the electronic device, so that the user can use the electronic device. After the electronic device performs the screen turn-on operation, if no operation entered by the user is received within a specified time, or no correct unlocking password is received within the specified time, the electronic device restores the screen-off state. The specified time may be 3 seconds or 5 seconds.

If the quantity of times that the touch panel of the electronic device receives the touch event within 5 seconds reaches 3, it indicates that the touch panel of the electronic device frequently receives the touch event. In this case, the electronic device may consider that there may be a mistouch operation, or there may be a suspicious operation that may be a mistouch operation. To further determine whether the suspicious operation is indeed the mistouch operation, a framework layer of the electronic device may obtain a current pose and a current motion status of the electronic device.

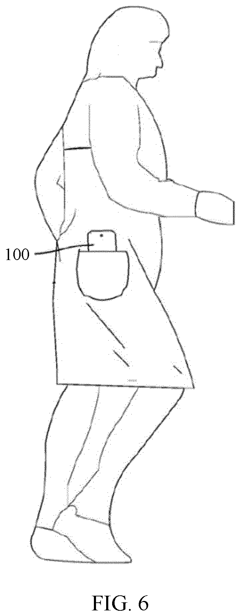

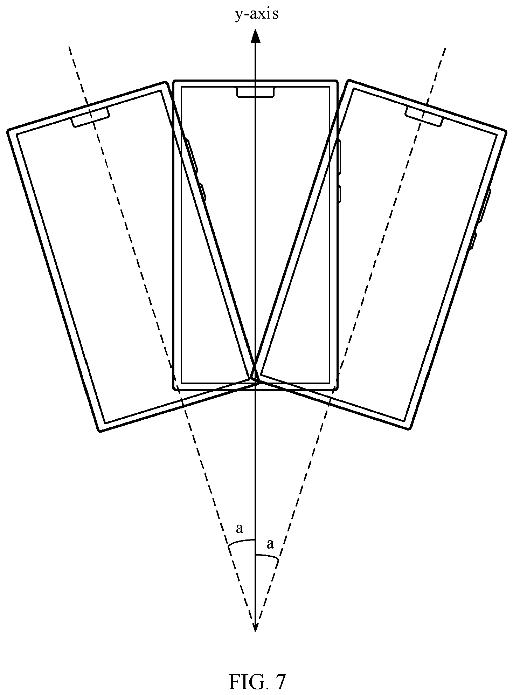

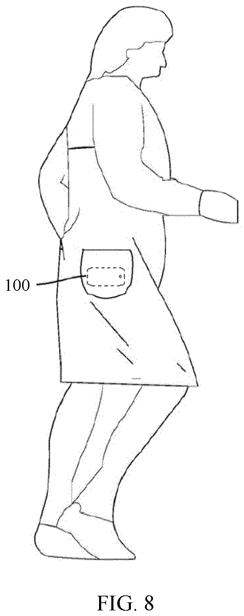

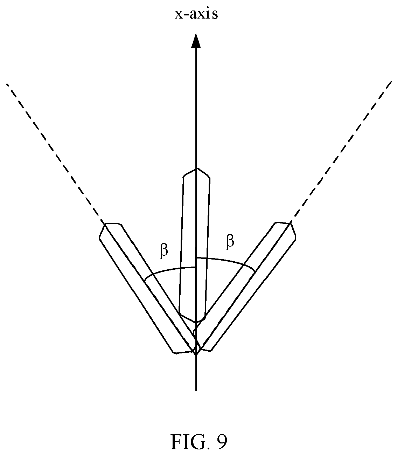

For example, the application framework layer of the electronic device may obtain device pose data collected by an orientation sensor, and determine the pose of the electronic device based on the device pose data. The pose of the electronic device may include horizontal placement, portrait mode, and landscape mode. The horizontal placement may include a mode in which the electronic device is placed horizontally on a desktop or another horizontal plane. When the electronic device is placed horizontally, an included angle between a plane on which the touch panel of the electronic device is located and a horizontal plane is less than or equal to a specified angle threshold. In other words, an included angle between the plane on which the touch panel of the electronic device is located and a straight line perpendicular to the horizontal plane is greater than the specified angle threshold. The portrait mode may include a mode in which the electronic device is vertically placed in a clothes pocket of the user shown in FIG. 6, or is vertically placed in a net bag on one side of the backpack of the user. As shown in FIG. 7, when the electronic device is in the portrait mode, there may be a specific degree of tilt. There may be a specific included angle between a plane on which the touch panel of the electronic device is located and a y-axis perpendicular to the horizontal plane, for example, angle a shown in FIG. 7. The landscape mode may include a mode in which the electronic device is transversely placed in a clothes pocket of the user shown in FIG. 8, or is transversely placed in a net bag on one side of the backpack of the user. FIG. 9 is a side view of an electronic device transversely placed in a clothes pocket. As shown in FIG. 9, when the electronic device is in a landscape mode, there may be a specific degree of tilt. There may be a specific included angle between a plane on which the touch panel of the electronic device is located and an x-axis perpendicular to the horizontal plane, for example, angle β shown in FIG. 9. Angle β and angle a may be the same or different in dimension. In conclusion, in comparison with the horizontal placement, when the electronic device is in the portrait mode or the landscape mode, the included angle between the plane on which the touch panel of the electronic device is located and the straight line perpendicular to the horizontal plane is less than or equal to the specified angle threshold.

In some embodiments, the application framework layer of the electronic device may obtain, in real time, the motion status that is of the electronic device and that is determined by a multimodal sensor data platform (multimodal sensor data platform, MSDP). The MSDP may be understood as a process running in the processor. The process may determine the motion status of the electronic device based on data collected by a sensor module of the electronic device. In some other embodiments, the electronic device may also determine the motion status of the electronic device based on real-time location change information of the electronic device. The motion status of the electronic device may include a stationary state and a non-stationary state. For example, when the electronic device is placed on a static desktop, or when the user carries the electronic device in a static lying state, the electronic device is in the stationary state. When the user carries the electronic device for a walk, a running, or a fast walk, or in a vehicle, a taxi, or a high-speed railway, the electronic device is in the non-stationary state.

If the motion status of the electronic device is the stationary state, it indicates that it is almost impossible for the touch panel of the electronic device to be subjected to friction from the pocket or the backpack due to motion. This can basically exclude a possibility of a mistouch on the touch panel of the electronic device. In this case, the electronic device considers that this touch operation is initiated by the user who needs to use the electronic device, and the electronic device may perform the screen turn-on operation. In addition, the electronic device may stop obtaining the current pose and the current motion status of the electronic device, to avoid generating additional power consumption.

When the motion status of the electronic device is a non-stationary state, the electronic device determines whether the pose is a target pose. The target pose means that the included angle between the plane on which the touch panel of the electronic device is located and the straight line perpendicular to the horizontal plane is less than or equal to the specified angle threshold. For example, the specified angle threshold may be 15°, 30°, or 45°. If the pose of the electronic device is not the target pose, it indicates that the electronic device may not be placed in the clothes pocket or in the net bag that is on one side of the backpack of the user. This can exclude the possibility of a mistouch on the touch panel of the electronic device. In this case, the electronic device considers that this touch operation is initiated by the user who needs to use the electronic device, and the electronic device may perform the screen turn-on operation.

When the motion status of the electronic device is the non-stationary state, and the current pose of the electronic device is the target pose, it indicates that the electronic device may be placed in a transparent or light-transmitting clothes pocket or in the net bag that is on one side of the backpack of the user, and the user is carrying the electronic device in motion. In this case, the electronic device considers that this touch operation is a mistouch operation caused by friction between the clothes pocket or the backpack and the touch panel of the electronic device. The electronic device ignores the touch operation, does not perform the screen turn-on operation, and does not turn on the touch panel of the electronic device, thereby avoiding frequent screen turn-on due to mistouches on the touch panel of the electronic device. This improves a mistouch prevention effect of the electronic device, and reduces power consumption of the electronic device.

In some application scenarios, as shown in FIG. 6, when the user vertically places the electronic device in the transparent or light-transmitting clothes pocket, and the touch panel of the electronic device faces an outer side, an optical proximity sensor located on a top side of the touch panel of the electronic device may detect that no object exists in the specified range of the electronic device, and the electronic device is currently in the uncovered state. In this case, the electronic device does not enter the mistouch prevention mode. If the user is moving, the clothes pocket may frequently touch the touch panel of the electronic device. If the electronic device turns on the screen each time the electronic device receives the touch operation on the touch panel, a plurality of times of screen-on may cause accumulated power consumption of up to hundreds of milliamps, and frequent screen turn-on may further cause the mobile phone to heat up. According to the method provided in this embodiment of this application, in the screen-off state, when the touch panel is touched due to a plurality of touch events in a short time, the electronic device may determine, based on the current pose and the current motion status of the electronic device, whether touch operations are mistouch operations caused by friction between the clothes pocket and the touch panel of the electronic device. If it is determined that the touch operations are the mistouch operations, the screen turn-on operation is not performed, thereby reducing power consumption of the electronic device.

In some other application scenarios, as shown in FIG. 7, when the user places the electronic device in the landscape mode in the transparent or light-transmitting clothes pocket, and the touch panel of the electronic device faces an outer side, if a material of the pocket is relatively thin, the material of the pocket cannot block light when the external ambient light is relatively strong, and the optical proximity sensor of the electronic device detects that no object may exist in the specified range of the electronic device. Alternatively, when the electronic device is placed in a transparent plastic bag, the transparent plastic bag cannot block the light, and the optical proximity sensor of the electronic device may also detect that no object exists in the specified range of the electronic device, and the electronic device is currently in the uncovered state. In this case, the electronic device does not enter the mistouch prevention mode. According to the method provided in this embodiment of this application, in the screen-off state, when the touch panel is touched due to a plurality of touch events in a short time, the electronic device may determine, based on the current pose and the current motion status of the electronic device, whether touch operations are mistouch operations caused by friction between the clothes pocket or the transparent plastic bag and the touch panel of the electronic device. If it is determined that the touch operations are the mistouch operations, the screen turn-on operation is not performed. In the foregoing embodiments, it is determined, with reference to the motion status and the pose of the electronic device, whether to perform the screen turn-on operation in response to the touch event on the touch panel. This can resolve a technical problem that when the electronic device is in the relatively thin pocket or backpack, the optical proximity sensor cannot detect covering, and therefore the electronic device cannot enter the mistouch prevention mode, and the mistouch triggered by motion makes the electronic device to turn on the screen, causing additional power consumption and causing the electronic device to heat up. In this way, determination accuracy of a mistouch prevention function can be improved and the power consumption of the electronic device can be reduced.

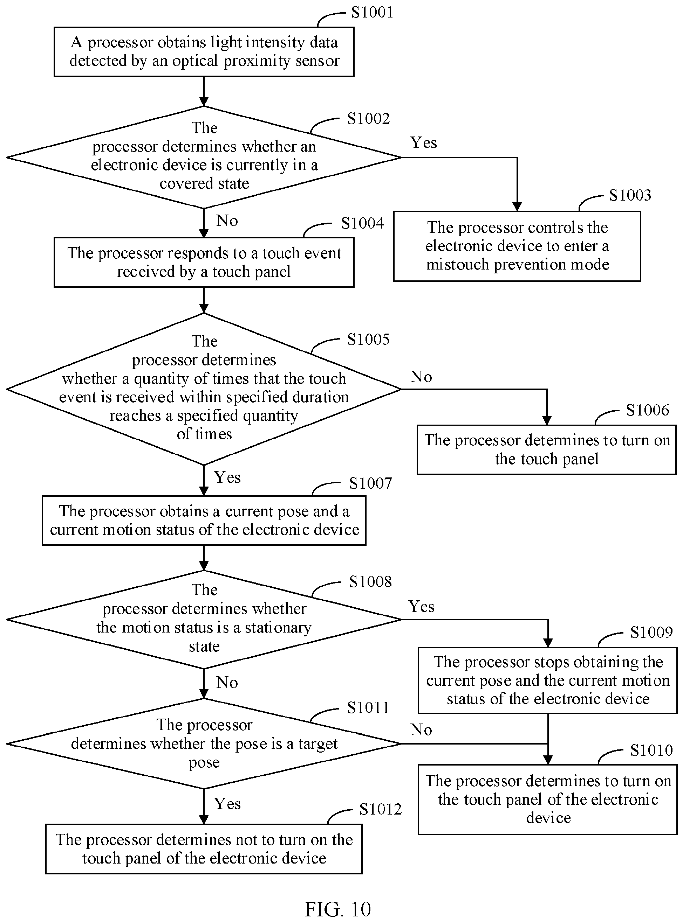

Based on a same technical concept as that in the foregoing embodiments, FIG. 10 is a flowchart of a device operation control method according to an embodiment of this application. The method may be applied to an electronic device like a smartphone. The electronic device may include the hardware architecture shown in FIG. 1 and the software architecture shown in FIG. 2. As shown in FIG. 10, the method may include the following steps.

S1001: A processor obtains light intensity data detected by an optical proximity sensor.

S1002: The processor calculates and determines, based on the light intensity data detected by the optical proximity sensor, whether the electronic device is currently in a covered state; and if the electronic device is currently in the covered state, performs step S1003, or if the electronic device is currently not in the covered state, performs step S1004.

S1003: The processor controls the electronic device to enter a mistouch prevention mode.

The mistouch prevention mode means that the electronic device does not respond to a touch event on a touch panel.

S1004: The processor responds to the touch event received by the touch panel.

S1005: The processor determines whether a quantity of times that the touch panel receives the touch event within specified duration reaches a specified quantity of times; and if the quantity of times does not reach the specified quantity of times, performs step S1006, or if the quantity of times reaches the specified quantity of times, performs step S1007.

S1006: The processor determines to turn on the touch panel.

S1007: The processor obtains a current pose and a current motion status of the electronic device.

The processor may obtain the current pose and the current motion status of the electronic device by using a speed sensor, an orientation sensor, and the like.

S1008: The processor determines whether the motion status is a stationary state; and if the motion status is the stationary state, performs step S1009; or if the motion status is not the stationary state, performs step S1011.

S1009: The processor stops obtaining the current pose and the current motion status of the electronic device, and then performs S1010.

S1010: The processor determines to turn on the touch panel of the electronic device.

S1011: The processor determines whether the current pose is a target pose; and if the current pose is not the target pose, performs step S1010; or if the current pose is the target pose, performs step S1012.

S1012: The processor determines not to turn on the touch panel of the electronic device.

According to the device operation control method provided in this embodiment of this application, if the optical proximity sensor is uncovered and a plurality of touch events are received in a short time, the motion status and the pose of the electronic device are used as conditions for determining mistouch prevention. A current application scenario is determined by detecting the motion status and the pose of the electronic device, to determine whether to perform a screen turn-on operation. This can not only optimize a mistouch prevention function of the electronic device, but also reduce power consumption of turning on the electronic device caused by mistouch, improve a battery life of the electronic device, and enhance user experience.

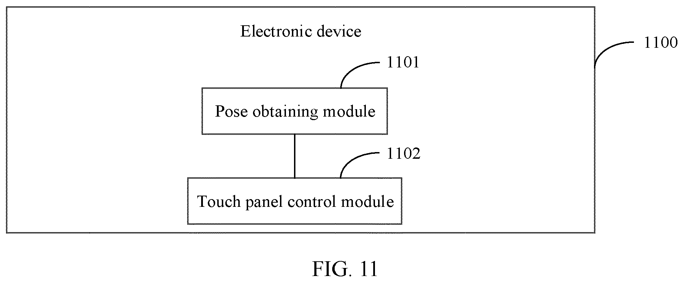

Based on a same technical concept as that in the foregoing embodiments, an embodiment of this application further provides an electronic device. As shown in FIG. 11, the electronic device 1100 may include a pose obtaining module 1101 and a touch panel control module 1102. The electronic device 1100 may be configured to implement functions of the foregoing device operation control method embodiments, and therefore can implement beneficial effects of the foregoing device operation control method embodiments.

The pose obtaining module 1101 may be configured to: when the electronic device is in a screen-off state, if an optical proximity sensor in the electronic device detects that the electronic device is currently in an uncovered state, and a quantity of times that a touch panel of the electronic device receives a touch event within specified duration reaches a specified quantity of times, obtain a current pose and a current motion status of the electronic device. The touch panel control module 1102 may be configured to: when the motion status of the electronic device is a non-stationary state and the pose of the electronic device is a target pose, determine not to turn on the touch panel of the electronic device. The target pose means that an included angle between a plane on which the electronic device is located and a straight line perpendicular to a horizontal plane is less than or equal to a specified angle threshold.

In some implementations, the touch panel control module 1102 may be further configured to: if the motion status of the electronic device is a stationary state, or the pose of the electronic device is not the target pose, determine to turn on the touch panel of the electronic device.

In some implementations, the pose obtaining module 1101 may be further configured to: if the motion status of the electronic device is the stationary state, stop obtaining the pose and the motion status of the electronic device.

In some implementations, the touch event means an event of continuously double-tapping the touch panel of the electronic device.

In some implementations, the touch panel control module 1102 may be further configured to: if the optical proximity sensor in the electronic device detects that the electronic device is currently in a covered state, control the electronic device to enter a mistouch prevention mode. The covered state represents that an object exists in a specified range of the electronic device.

Based on a same technical concept as that in the foregoing method embodiments, an embodiment of this application further provides an electronic device. The electronic device may be configured to implement functions of the method embodiment shown in FIG. 10, and therefore can implement beneficial effects of the foregoing method embodiments. In some embodiments, for a specific structure of the electronic device, refer to FIG. 1. Details are not described herein.

Method steps in embodiments of this application may be implemented through hardware manner, or may be implemented in a manner of executing computer programs or instructions by the processor. The computer program or instructions may constitute a computer program product. An embodiment of this application further provides a computer program product, including computer-executable instructions. In an embodiment, the computer-executable instructions are used to enable a computer to perform a function of the method embodiment shown in FIG. 10.

The computer-executable instructions may be stored in a computer-readable storage medium. An embodiment of this application further provides a computer-readable storage medium, and the computer-readable storage medium stores executable instructions. In an embodiment, the computer-executable instructions are used to enable a computer to perform a function of the method embodiment shown in FIG. 10.

The computer-readable storage medium provided in this embodiment of this application may be a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically ePROM, EEPROM), a register, a hard disk, a removable hard disk, a CD-ROM, or any other form of computer-readable storage medium well-known in the art.

The computer-executable instructions may be stored in the computer-readable storage medium, or may be transmitted from one computer-readable storage medium to another computer-readable storage medium. For example, the computer program or instructions may be transmitted from one website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape, or may be an optical medium, for example, a digital video disc (digital video disc, DVD), or may be a semiconductor medium, for example, a solid-state drive.

In various embodiments of this application, unless otherwise stated or there is a logic conflict, terms and/or descriptions in different embodiments are consistent and may be mutually referenced, and technical features in the different embodiments may be combined based on an internal logical relationship thereof, to form a new embodiment. In addition, the terms "include", "have", and any variant thereof are intended to cover non-exclusive inclusion, for example, including a series of steps or units. A method, system, product, or device is not necessarily limited to those steps or units expressly listed, but may include another step or unit not expressly listed or inherent to such a process, method, product, or device.

Although this application is described with reference to specific features and embodiments thereof, it is clear that various modifications and combinations may be made to them without departing from the scope of the appended claims. Correspondingly, this specification and the accompanying drawings are merely example descriptions of solutions defined in the appended claims.

## Claims

1. A device operation control method, applied to an electronic device (100), wherein the method comprises:
when the electronic device is in a screen-off state, if an optical proximity sensor (180G) in the electronic device detects that the electronic device is currently in an uncovered state (S1002), and a quantity of times that a touch panel of the electronic device receives a touch event within specified duration reaches a specified quantity of times (S1004), obtaining a current pose and a current motion status of the electronic device (S1007); and
if the motion status of the electronic device is a non-stationary state and the pose of the electronic device is a target pose (S1008, S1011), determining not to turn on the touch panel of the electronic device (S1012), wherein the target pose means that an included angle between a plane on which the electronic device is located and a straight line perpendicular to a horizontal plane is less than or equal to a specified angle threshold.

2. The method according to claim 1, wherein the method further comprises:
if the motion status of the electronic device is a stationary state (S1008), or the pose of the electronic device is not the target pose (S1011), determining to turn on the touch panel of the electronic device (S1010).

3. The method according to claim 1 or 2, wherein the method further comprises:
if the motion status of the electronic device is the stationary state (S1008), stopping obtaining the pose and the motion status of the electronic device (S1009).

4. The method according to any one of claims 1 to 3, wherein the touch event is an event of continuously double-tapping the touch panel of the electronic device.

5. The method according to any one of claims 1 to 4, wherein the method further comprises:
if the optical proximity sensor in the electronic device detects that the electronic device is currently in a covered state (S1002), controlling the electronic device to enter a mistouch prevention mode (S1003), wherein the covered state represents that an object exists in a specified range of the electronic device.

6. An electronic device (100, 1100), comprising a processor (110), an optical proximity sensor (180G), a sensor module (180, 1101) and a touch panel (194, 1102), wherein
the optical proximity sensor is configured to detect whether an object exists in a specified range of the electronic device;
the sensor module (180B, 180E, 1101) is configured to detect a current pose and current motion status of the electronic device; and
the processor is configured to:
when the touch panel is in a screen-off state, if the optical proximity sensor detects that the electronic device is currently in an uncovered state, and a quantity of times that the touch panel receives a touch event within specified duration reaches a specified quantity of times, obtain a current pose and a current motion status of the electronic device; and
if the motion status of the electronic device is a non-stationary state and the pose of the electronic device is a target pose, determine not to turn on the touch panel, wherein the target pose means that an included angle between a plane on which the electronic device is located and a straight line perpendicular to a horizontal plane is less than or equal to a specified angle threshold.

7. The electronic device according to claim 6, wherein the processor is further configured to:
if the motion status of the electronic device is a stationary state, or the pose of the electronic device is not the target pose, determine to turn on the touch panel.

8. The electronic device according to claim 6 or 7, wherein the processor is further configured to:
if the motion status of the electronic device is the stationary state, stop obtaining the pose and the motion status of the electronic device.

9. The electronic device according to any one of claims 6 to 8, wherein the touch event is an event of continuously double-tapping the touch panel.

10. The electronic device according to any one of claims 6 to 9, wherein if the optical proximity sensor in the electronic device detects that the electronic device is currently in a covered state, the processor is configured to control the electronic device to enter a mistouch prevention mode, wherein the covered state represents that an object exists in a specified range of the electronic device.

11. A computer-readable storage medium, wherein the computer-readable storage medium stores computer-executable instructions, and the computer-executable instructions are used to enable a computer to perform the method according to any one of claims 1 to 5.

## Patentansprüche

1. Gerätebetriebsteuerverfahren, das auf ein elektronisches Gerät (100) angewendet wird, wobei das Verfahren Folgendes umfasst:
wenn sich das elektronische Gerät in einem Zustand mit ausgeschaltetem Bildschirm befindet, falls ein optischer Näherungssensor (180G) in dem elektronischen Gerät detektiert, dass sich das elektronische Gerät derzeit in einem nicht abgedeckten Zustand befindet (S1002), und eine Anzahl von Malen, die ein Berührungsfeld des elektronischen Geräts ein Berührungsereignis innerhalb einer festgelegten Dauer empfängt, eine festgelegte Anzahl von Malen erreicht (S1004), Erhalten einer aktuellen Stellung und eines aktuellen Bewegungsstatus des elektronischen Geräts (S1007); und
falls der Bewegungsstatus des elektronischen Geräts ein nicht stationärer Zustand ist und die Stellung des elektronischen Geräts eine Zielstellung ist (S1008, S1011), Bestimmen, dass das Berührungsfeld des elektronischen Geräts nicht eingeschaltet werden soll (S1012), wobei die Zielstellung bedeutet, dass ein eingeschlossener Winkel zwischen einer Ebene, in der sich das elektronische Gerät befindet, und einer geraden Linie senkrecht zu einer horizontalen Ebene kleiner als oder gleich einem festgelegten Winkelschwellenwert ist.

2. Verfahren nach Anspruch 1, wobei das Verfahren ferner Folgendes umfasst:
falls der Bewegungsstatus des elektronischen Geräts ein stationärer Zustand ist (S1008) oder die Stellung des elektronischen Geräts nicht die Zielstellung ist (S1011), Bestimmen, dass das Berührungsfeld des elektronischen Geräts eingeschaltet werden soll (S1010).

3. Verfahren nach Anspruch 1 oder 2, wobei das Verfahren ferner Folgendes umfasst:
falls der Bewegungsstatus des elektronischen Geräts der stationäre Zustand ist (S1008), Stoppen eines Erhaltens der Stellung und des Bewegungsstatus des elektronischen Geräts (S1009).

4. Verfahren nach einem der Ansprüche 1 bis 3, wobei das Berührungsereignis ein Ereignis eines kontinuierlichen Doppeltippens auf das Berührungsfeld des elektronischen Geräts ist.

5. Verfahren nach einem der Ansprüche 1 bis 4, wobei das Verfahren ferner Folgendes umfasst:
falls der optische Näherungssensor in dem elektronischen Gerät detektiert, dass sich das elektronische Gerät derzeit in einem abgedeckten Zustand befindet (S1002), Steuern des elektronischen Geräts so, dass es in einen Fehlberührungsschutzmodus (S1003) eintritt, wobei der abgedeckte Zustand darstellt, dass ein Objekt in einem festgelegten Bereich des elektronischen Geräts vorhanden ist.

6. Elektronisches Gerät (100, 1100), das einen Prozessor (110), einen optischen Näherungssensor (180G), ein Sensormodul (180, 1101) und ein Berührungsfeld (194, 1102) umfasst, wobei
der optische Näherungssensor dazu konfiguriert ist, zu detektieren, ob ein Objekt in einem festgelegten Bereich des elektronischen Geräts vorhanden ist;
das Sensormodul (180B, 180E, 1101) dazu konfiguriert ist, eine derzeitige Stellung und einen derzeitigen Bewegungsstatus des elektronischen Geräts zu detektieren; und
der Prozessor zu Folgendem konfiguriert ist:
wenn sich das Berührungsfeld in einem Zustand mit ausgeschaltetem Bildschirm befindet, falls der optische Näherungssensor detektiert, dass sich das elektronische Gerät derzeit in einem nicht abgedeckten Zustand befindet, und eine Anzahl von Malen, die das Berührungsfeld ein Berührungsereignis innerhalb einer festgelegten Dauer empfängt, eine festgelegte Anzahl von Malen erreicht, Erhalten einer derzeitigen Stellung und eines derzeitigen Bewegungsstatus des elektronischen Geräts; und
falls der Bewegungsstatus des elektronischen Geräts ein nicht stationärer Zustand ist und die Stellung des elektronischen Geräts eine Zielstellung ist, Bestimmen, dass das Berührungsfeld nicht eingeschaltet werden soll, wobei die Zielstellung bedeutet, dass ein eingeschlossener Winkel zwischen einer Ebene, in der sich das elektronische Gerät befindet, und einer geraden Linie senkrecht zu einer horizontalen Ebene kleiner als oder gleich einem festgelegten Winkelschwellenwert ist.

7. Elektronisches Gerät nach Anspruch 6, wobei der Prozessor ferner zu Folgendem konfiguriert ist:
falls der Bewegungsstatus des elektronischen Geräts ein stationärer Zustand ist oder die Stellung des elektronischen Geräts nicht die Zielstellung ist, Bestimmen, dass das Berührungsfeld eingeschaltet werden soll.

8. Elektronisches Gerät nach Anspruch 6 oder 7, wobei der Prozessor ferner zu Folgendem konfiguriert ist:
falls der Bewegungsstatus des elektronischen Geräts der stationäre Zustand ist, Stoppen eines Erhaltens der Stellung und des Bewegungsstatus des elektronischen Geräts.

9. Elektronisches Gerät nach einem der Ansprüche 6 bis 8, wobei das Berührungsereignis ein Ereignis eines kontinuierlichen Doppeltippens auf das Berührungsfeld ist.

10. Elektronisches Gerät nach einem der Ansprüche 6 bis 9, wobei, falls der optische Näherungssensor in dem elektronischen Gerät detektiert, dass sich das elektronische Gerät derzeit in einem abgedeckten Zustand befindet, der Prozessor dazu konfiguriert ist, das elektronische Gerät so zu steuern, dass es in einen Fehlberührungsschutzmodus eintritt, wobei der abgedeckte Zustand darstellt, dass ein Objekt in einem festgelegten Bereich des elektronischen Geräts vorhanden ist.

11. Computerlesbares Speichermedium, wobei das computerlesbare Speichermedium computerausführbare Anweisungen speichert, und wobei die computerausführbaren Anweisungen verwendet werden, um einem Computer zu ermöglichen, das Verfahren nach einem der Ansprüche 1 bis 5 durchzuführen.

## Revendications

1. Procédé de commande de fonctionnement de dispositif, appliqué à un dispositif électronique (100), dans lequel le procédé comprend :
lorsque le dispositif électronique est dans un état d'écran éteint, si un capteur de proximité optique (180G) dans le dispositif électronique détecte que le dispositif électronique est actuellement dans un état non couvert (S1002), et une quantité de fois qu'un panneau tactile du dispositif électronique reçoit un événement tactile dans les limites d'une durée spécifiée atteint une quantité spécifiée de fois (S1004), l'obtention d'une orientation actuelle et d'un statut de mouvement actuel du dispositif électronique (S1007) ; et
si le statut de mouvement du dispositif électronique est un état non stationnaire et l'orientation du dispositif électronique est une orientation cible (S1008, S1011), la détermination de ne pas allumer le panneau tactile du dispositif électronique (S1012), dans lequel l'orientation cible signifie qu'un angle inclus entre un plan sur lequel le dispositif électronique est situé et une ligne droite perpendiculaire à un plan horizontal est inférieur ou égal à un seuil d'angle spécifié.

2. Procédé selon la revendication 1, dans lequel le procédé comprend en outre :
si le statut de mouvement du dispositif électronique est un état stationnaire (S1008), ou l'orientation du dispositif électronique n'est pas l'orientation cible (S1011), la détermination d'allumer le panneau tactile du dispositif électronique (S1010).

3. Procédé selon la revendication 1 ou 2, dans lequel le procédé comprend en outre :
si le statut de mouvement du dispositif électronique est l'état stationnaire (S1008), l'arrêt de l'obtention de l'orientation et du statut de mouvement du dispositif électronique (S1009).

4. Procédé selon l'une quelconque des revendications 1 à 3, dans lequel l'événement tactile est un événement consistant à taper deux fois en continu sur le panneau tactile du dispositif électronique.

5. Procédé selon l'une quelconque des revendications 1 à 4, dans lequel le procédé comprend en outre :
si le capteur de proximité optique dans le dispositif électronique détecte que le dispositif électronique est actuellement dans un état couvert (S1002), la commande du dispositif électronique pour entrer dans un mode de prévention de tactilité accidentelle (S1003), dans lequel l'état couvert représente le fait qu'un objet existe dans une étendue spécifiée du dispositif électronique.

6. Dispositif électronique (100, 1100), comprenant un processeur (110), un capteur de proximité optique (180G), un module capteur (180, 1101) et un panneau tactile (194, 1102), dans lequel
le capteur de proximité optique est configuré pour détecter si un objet existe dans une étendue spécifiée du dispositif électronique ;
le module capteur (180B, 180E, 1101) est configuré pour détecter une orientation actuelle et un statut de mouvement actuel du dispositif électronique ; et
le processeur est configuré pour :
lorsque le panneau tactile est dans un état d'écran éteint, si le capteur de proximité optique détecte que le dispositif électronique est actuellement dans un état non couvert, et une quantité de fois que le panneau tactile reçoit un événement tactile dans les limites d'une durée spécifiée atteint une quantité spécifiée de fois, obtenir une orientation actuelle et un statut de mouvement actuel du dispositif électronique ; et
si le statut de mouvement du dispositif électronique est un état non stationnaire et l'orientation du dispositif électronique est une orientation cible, déterminer de ne pas allumer le panneau tactile, dans lequel l'orientation cible signifie qu'un angle inclus entre un plan sur lequel le dispositif électronique est situé et une ligne droite perpendiculaire à un plan horizontal est inférieur ou égal à un seuil d'angle spécifié.

7. Dispositif électronique selon la revendication 6, dans lequel le processeur est en outre configuré pour :
si le statut de mouvement du dispositif électronique est un état stationnaire, ou l'orientation du dispositif électronique n'est pas l'orientation cible, déterminer d'allumer le panneau tactile.

8. Dispositif électronique selon la revendication 6 ou 7, dans lequel le processeur est en outre configuré pour :
si le statut de mouvement du dispositif électronique est l'état stationnaire, arrêter d'obtenir l'orientation et le statut de mouvement du dispositif électronique.

9. Dispositif électronique selon l'une quelconque des revendications 6 à 8, dans lequel l'événement tactile est un événement consistant à taper deux fois en continu sur le panneau tactile.

10. Dispositif électronique selon l'une quelconque des revendications 6 à 9, dans lequel, si le capteur de proximité optique dans le dispositif électronique détecte que le dispositif électronique est actuellement dans un état couvert, le processeur est configuré pour commander le dispositif électronique pour entrer dans un mode de prévention de tactilité accidentelle, dans lequel l'état couvert représente le fait qu'un objet existe dans une étendue spécifiée du dispositif électronique.

11. Support de stockage lisible par ordinateur, dans lequel le support de stockage lisible par ordinateur stocke des instructions exécutables par ordinateur, et les instructions exécutables par ordinateur sont utilisées pour permettre à un ordinateur de réaliser le procédé selon l'une quelconque des revendications 1 à 5.
